# EUROPEAN PATENT APPLICATION

(11) **EP 4 725 795 A1**
(43) Date of publication of application: **15.04.2026**
(21) Application number: 25207255.8
(22) Date of filing: 07.10.2025
(51) Int. Cl.: B62B 7/06, B62B 7/14

(54) **A PUSHCHAIR HINGE ASSEMBLY AND PUSHCHAIR**

(30) Priority: 09.10.2024 GB 202414856
(71) Applicant: Mamas & Papas (Holdings) Limited, West Yorkshire, HD5 0RH (GB)
(72) Inventor: HARGREAVES, Nichola, Leanne, Huddersfield, HD5 0RH (GB); HARRIS, Matthew, Allen, Huddersfield, HD5 0RH (GB)
(74) Representative: Haseltine Lake Kempner LLP

(57) **Abstract**

A pushchair hinge assembly (300) comprises: a hinge body (310); a seat dock (350) coupled to the hinge body for pivotal movement about a dock pivot axis; a handle member (324) coupled to the hinge body for pivotal movement about a handle pivot axis; a first leg member (320) coupled to the hinge body; and a second leg member (322) coupled to the hinge body for pivotal movement about a leg pivot axis, wherein the hinge assembly further comprises a first latch mechanism (400) configured to selectively restrict rotation of the handle member about the handle pivot axis; and a second latch mechanism (500) configured to selectively restrict rotation of the second leg member about the leg pivot axis based on a pivot angle of the handle member (324) about the handle pivot axis and a pivot angle of the seat dock (350) about the dock pivot axis. A pushchair comprising the pushchair hinge assembly and a method of folding the pushchair are also provided.

## Description

### Technical Field

The present disclosure relates to a hinge assembly for a pushchair, and is particularly, although not exclusively, concerned with a hinge assembly for a pushchair with improved ease of use.

### Background

Pushchairs often include one or more hinges and/or mechanical linkages/mechanisms for enabling the frame of the pushchair to be folded into a more compact shape when transporting or storing the pushchair.

It may be desirable that two actions are made by a user of the pushchair in order to unlock a hinge assembly of the pushchair to enable the pushchair to fold from the deployed configuration to the folded configuration. This may be to avoid the hinge assembly of the pushchair being unlocked inadvertently.

It is further desirable that unlocking a pushchair hinge is intuitive and easy to perform for a user of the pushchair.

### Statements of Invention

According to an aspect of the present disclosure, there is provided a pushchair hinge assembly comprising: a hinge body; a seat dock, e.g. for a seat for the pushchair to be coupled to, the seat dock, the seat dock coupled to the hinge body for pivotal movement about a dock pivot axis; a handle member coupled to the hinge body for pivotal movement about a handle pivot axis; a first leg member coupled to the hinge body; and a second leg member coupled to the hinge body for pivotal movement about a leg pivot axis, wherein the hinge assembly further comprises a first latch mechanism configured to selectively restrict rotation of the handle member about the handle pivot axis; and a second latch mechanism configured to selectively restrict rotation of the second leg member about the leg pivot axis based on a pivot angle of the handle member about the handle pivot axis and a pivot angle of the seat dock about the dock pivot axis.

The handle member may be pivotable about the handle pivot axis between a folded position and a deployed position.

In the folded position, the handle frame member may be substantially parallel with the first leg member. In the deployed position, the handle member may be at an angle relative to the first leg member.

The first latch mechanism may be configured to selectively prevent or restrict the handle member from pivoting from the deployed position towards the folded position. The first latch mechanism may comprise a handle lock member at least partially received within an interior of the handle member. The handle lock member may be configured to selectively engage the hinge body to prevent or restrict rotation of the handle.

The first latch mechanism may comprise a rack and pinion mechanism. The rack may be coupled to, or integrally formed with, the handle lock member. Rotation of the pinon gear may thereby act to retract the handle lock member, so that the handle lock member does not engage the hinge body.

The pushchair hinge assembly may further comprise a handle frame member coupled to, or integrally formed with, the handle member. The handle frame member may comprise a telescoping portion configured to telescope relative to a fixed portion of the handle frame member towards and away from the hinge body.

The first mechanism may be configured such that telescoping the telescoping portion of the handle frame member towards the hinge body acts to retract the handle lock member, so that the handle lock member no longer engages the hinge body. The first mechanism may comprise a handle lock plunger. The telescoping portion may be configured to engage the handle lock plunger, when the telescoping portion is telescoped towards the hinge assembly, and urge the handle lock plunger to move towards the hinge assembly. The handle lock plunger may be configured to rotate the pinion of the first latch mechanism to cause the handle lock member to disengage from the hinge body when the handle lock plunger is moved towards the hinge assembly. For example, the handle lock plunger may comprise a rack meshingly engaged with the pinion gear, e.g. on a opposite side of a pinion pivot axis from the rack provided on the handle lock member.

The second latch mechanism may be configured to prevent or restrict rotation of the second leg member when the handle member in the deployed position.

The second latch mechanism may comprise a lock assembly movably, e.g. slidably, mounted on the hinge body. The lock assembly may be movable relative to the hinge body between a locking position and an unlocked position.

In the locking position, the lock assembly may be arranged to engage the second leg member in the deployed position of the second leg to prevent or restrict the second leg from moving toward the folded position. In the unlocked position, lock assembly may not engage the second leg member.

The handle member may comprise a cam portion configured to engage the lock assembly and maintain the lock assembly in the locking position when the handle member is in the deployed position of the handle member.

The dock pivot axis may be perpendicular to directions in which handle member, first leg member and second leg member extend from the hinge body. The dock pivot axis may be parallel with the handle pivot axis and/or the leg pivot axis.

The seat dock may be pivotable relative to the hinge body between a deployed position and a folded position. In the deployed position, a docking surface of the seat dock may be substantially parallel with a vertical direction. In the folded position, the docking surface may be substantially parallel with a direction in which the first leg member extends, e.g. from the hinge body. The seat dock may be rotatable through an angle of greater than or equal to 90 degrees between deployed and folded positions of the seat dock.

The second latch mechanism may be configured to prevent or restrict rotation of the second leg member when the seat dock in the deployed position. The seat dock may comprise a boss configured to engage the lock assembly and maintain the lock assembly in the locking position when the seat dock is in the deployed position.

The lock assembly may comprise a first locking part and a second locking part. The second locking part may be movably, e.g. slidably, coupled to the hinge body. The second locking part may be movable between the locking position and unlocked position of the lock assembly. In other words, the position of the lock assembly may be determined by the position of the second locking part.

The first locking part may be movably, e.g. slidably, coupled to the second locking part. The first locking part may be movable relative to the second locking position between a relative locking position and an override position. In the relative locking position, the first locking part can engage the second leg member, when the lock assembly is in the locking position, to prevent or restrict the second leg from moving from the deployed position toward the folded position. In the override position, the first locking part does not prevent movement the second leg member between the folded position and the deployed position. The first locking part may be biased into the relative locking position, relative to the second locking part.

The cam portion of the handle member may be configured to engage the second locking part to maintain the lock assembly in the locking position when the handle member is in the deployed position.

The second leg member may comprise a cam portion configured to engage the first locking part when the second leg member is in the folded position. The cam portion may be configured to urge the first locking part into the override position when the second leg member is moved from the folded position towards the deployed position, e.g. in order to permit the second leg member to move when the lock assembly is in the locking position.

The cam portion of the second leg member may comprise a step. A rise of the step may extend in a direction parallel with the direction in which the first locking part moves from the relative locking position to the override position. The first locking part may be configured to engage the rise of the step portion, when the second leg member is in the deployed position, e.g. so that the cam portion does not urge the first locking part to move from the relative locking position to the override position when it engages the step.

The seat dock may comprise a dock locking mechanism configured to selectively lock the seat dock in the deployed position. The dock locking mechanism may comprises a block part. The block part may be configured to be displaced by a seat or adaptor docked in the seat dock to lock the dock locking mechanism.

A pushchair may comprise the above-mentioned pushchair hinge assembly. The pushchair may further comprise a handle frame member coupled to, or integrally formed with the handle member; a first leg member coupled to, or integrally formed with the first leg member; and/or a second leg member coupled to, or integrally formed with the second leg member.

The pushchair may further comprise a seat configured to be docked in the seat dock. The seat may comprise a seat fold dock block. The seat fold dock block may be configured to displace the block part when the seat is in a deployed configuration and not displace the block part when the seat is in a folded configuration, in order to permit the seat dock to rotate relative to the hinge body, e.g. so that the seat can be folded together with the pushchair frame.

According to another aspect of the present disclosure, there is provided method of folding a pushchair. The pushchair may comprise the above-mentioned pushchair hinge assembly. The method comprises: unlocking the first locking mechanism; folding the handle member into the folded configuration; and rotating the seat dock into the folded configuration, in order to unlock the second locking mechanism, wherein the method further comprise folding the second leg member into the folded configuration.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention. For example, features described in relation to the first mentioned aspect may be combined with the features of the second mentioned aspect.

### Brief Description of the Drawings

For a better understanding of the present invention, and to show more clearly how it may be carried into effect, reference will now be made, by way of example, to the accompanying drawings, in which:
Figure 1 is a front perspective view of a pushchair, according to arrangements of the present disclosure, in a deployed configuration;
Figure 2 is a front perspective of the pushchair in a folded configuration;
Figure 3 is a front perspective cross-sectional view of a pushchair hinge assembly, according to arrangements of the present disclosure, with a first latch mechanism in a locking position;
Figure 4 is a front perspective cross-sectional view of the pushchair hinge assembly with the first latch mechanism in an unlocked position;
Figure 5a is a side view of the pushchair hinge assembly with a handle member in a folded position;
Figure 5b is a side view of the pushchair hinge assembly with the handle member in a deployed position and a second leg member at a position between a folded position and a deployed position;
Figure 6 is a front perspective cross-sectional view of the pushchair hinge assembly with the handle member in the folded position, and a set dock in a deployed position;
Figure 7 is a side view of the pushchair hinge assembly with the handle member, seat dock and second leg member in folded positions;
Figure 8 is a front perspective cross-sectional view of the pushchair hinge assembly with the handle member and seat dock in folded positions;
Figure 9a is a front perspective cross-sectional view of the pushchair, with a seat of the pushchair in a deployed configuration;
Figures 9b and 9c are side cross-sectional views of a seat for a pushchair in deployed and folded positions of the seat respectively; and
Figure 10 is a flow chart illustrating a method of folding a pushchair according to arrangements of the present disclosure.

### Detailed Description

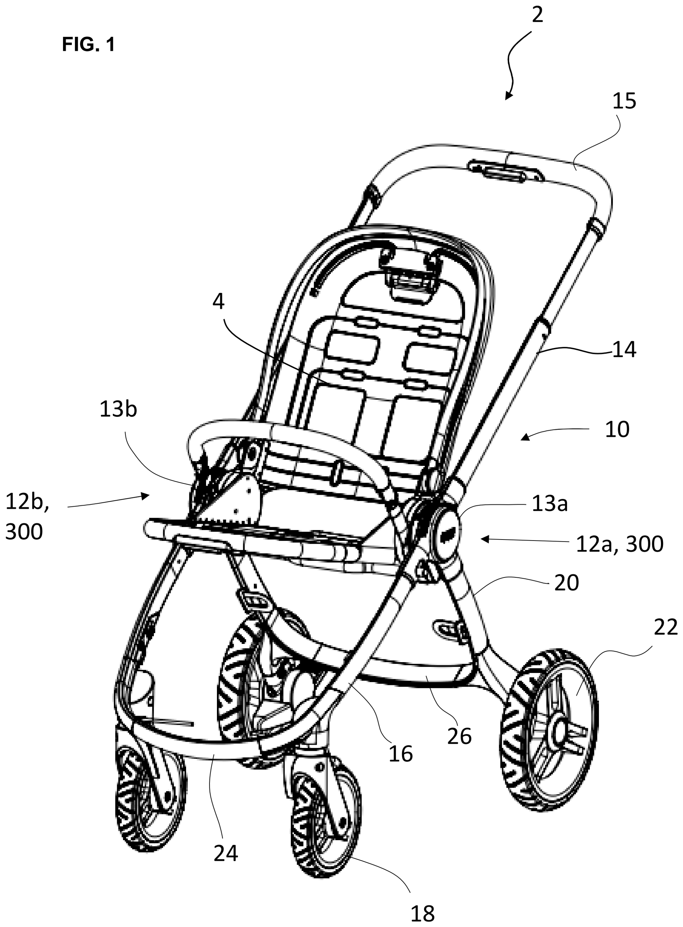

With reference to Figure 1, a pushchair 2 according to arrangements of the present disclosure comprises a pushchair frame 10 and a seat 4, e.g. a reclining seat, for a child to sit or lie on, which is supported on the pushchair frame 10. In other arrangements, another type of attachment for a child to sit or lie on, such as a carrycot or car seat, may be supported on the pushchair frame 10 instead of the seat 4. The term "seat" is used throughout this disclosure to refer to any attachment that can be supported on the pushchair frame 10 for a child to sit or lie on.

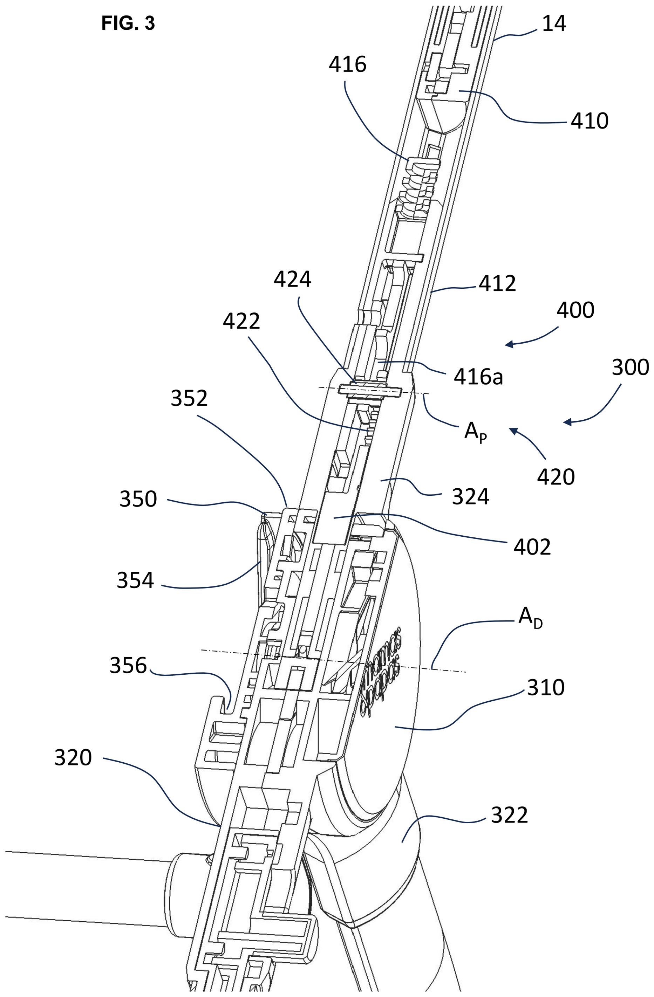

The pushchair frame 10 comprises a first pushchair hinge assembly 12a provided on a left side of the pushchair frame and a second pushchair hinge assembly 12b provided on a right side of the pushchair frame. Either or both of the first and second pushchair hinge assemblies 12a, 12b may comprise a pushchair hinge assembly 300 according to the present disclosure and described with reference to Figures 3 to 9 below. For example, the hinge assembly 12a may comprise the pushchair hinge assembly 300.

In the description below, features of the pushchair frame 10, and in particular, frame members of the pushchair frame and their connections with the pushchair hinge assembly 12a on one lateral side of the pushchair frame are described. However, it will be appreciated that the pushchair frame 10 may be symmetrical between left and right, lateral sides of the pushchair frame, and hence, a similar arrangement of components, such as frame members, may be provided on each lateral side of the pushchair frame 10.

The pushchair frame 10 may further comprise a handle frame member 14 extending, e.g. upwardly and/or rearwardly, from the pushchair hinge assembly 12a and a handlebar 15 extending between the distal end of the handle frame member 14 and the distal end of another handle frame member provided on the other lateral side of the pushchair frame. The handlebar 15 may be for a user to grip and push the pushchair. In other arrangements, the pushchair frame 10 may not comprise the handlebar extending between the handle frame members 14 and may instead comprise a handles, e.g. separate handles, coupled to the handle frame members 14 for the user to grip when pushing the pushchair.

The pushchair frame 10 further comprises a first leg frame member, e.g. a front leg frame member 16, extending from the pushchair hinge assembly 12a for supporting one or more front wheels 18 of the pushchair, and a second leg frame member, e.g. a rear leg frame member 20, extending from the pushchair hinge assembly 12a for supporting one or more rear wheels 22 of the pushchair.

The pushchair frame 10 may comprise a front lateral frame member 24 extending laterally between distal ends of the front leg frame members 16 provided on either lateral side of the pushchair frame. As illustrated, the front lateral frame member 24 may be arcuate. In some arrangements, the front lateral frame member 24 may be integrally formed with one or both of the front leg frame members 16. In such arrangements, a single frame member may extend from the pushchair hinge assembly 12a on one side of the pushchair frame to one of the front wheels 18, laterally across to the other of the front wheels 18, and from the other of the front wheels to the pushchair hinge assembly 12b on the other side of the pushchair frame.

Similarly, the pushchair frame 10 may comprise a rear lateral frame member 26 extending laterally between distal ends of the rear leg frame members 20. In some arrangements, the rear lateral frame member 26 may be integrally formed with one or both of the rear leg frame members 20. In such arrangements, a single frame member may extend from the pushchair hinge assembly 12a on one side of the pushchair frame to one of the rear wheels 22 laterally across to the other of the rear wheels 22, and from the other of the rear wheels to the pushchair hinge assembly 12b on the other side of the pushchair frame.

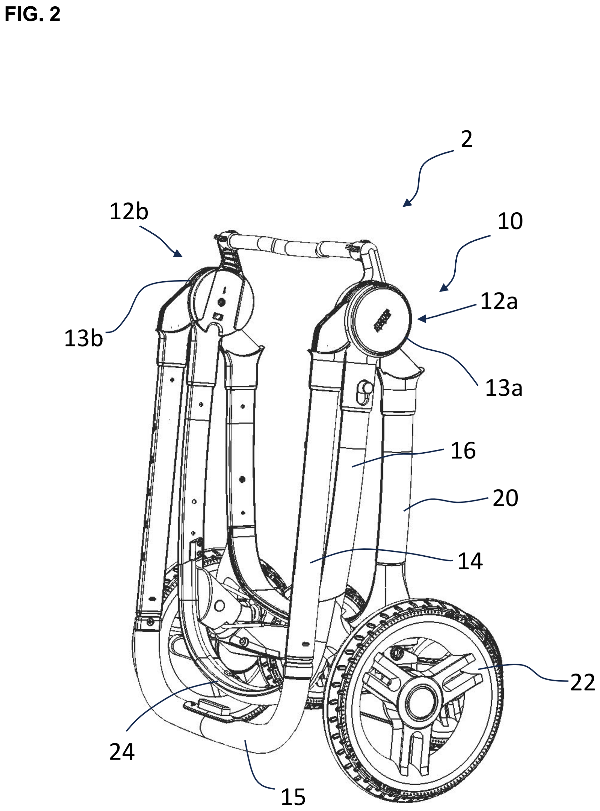

The pushchair 2, e.g. the pushchair frame 10, is configured to fold from the deployed configuration, depicted in Figure 1, in which the handle frame members 14, front leg frame members 16, and rear leg frame members 20 extend from the pushchair hinge assembly 12a in directions spaced apart from one another, into a folded configuration, illustrated in Figure 2, in which the handle frame members 14, front leg frame members 16, and rear leg frame members 20 extend from the pushchair hinge assembly 12a in substantially the same directions as one another or in directions substantially parallel with one another. The pushchair hinge assemblies 12a, 12b may be configured to facilitate pivoting of the front leg frame members 16, rear leg frame members 20 and handle frame members 14 relative to one another between the deployed configuration and the folded configuration. The positions, e.g. relative positions, which the components of the pushchair are arranged in when the pushchair is in the folded configuration may be referred to within this disclosure as folded positions of the components and positions which the components of the pushchair are in when the pushchair is in the deployed configuration may be referred to within this disclosure as deployed positions of the components.

As depicted in Figure 2, when the pushchair frame 10 is in the folded configuration, the pushchair frame may be stood upright on the rear and/or front wheels 18, 22, and the handlebar 15. Further, although omitted for clarity in Figure 2, the pushchair 2 may be folded whilst the seat 4 remains attached to the pushchair frame. As described in greater detail below, in such arrangements, the seat may be folded, by moving a seat back of the seat to be substantially parallel with and alongside a seat base of the seat, prior to folding the pushchair frame 10.

The pushchair hinge assemblies 12a, 12b may comprise a hinge body 13a, 13b. in the arrangement depicted, the hinge body comprises a prism shaped housing, such as a substantially cylindrical housing, having a longitudinal axis. However in other arrangements, the hinge body may be any other shape. One of the front and rear leg frame members 16, 20 may be coupled, e.g. fixedly coupled, to the hinge body 13a, 13b of the pushchair hinge assembly. The other of the front and rear leg frame members 16, 20 may be pivotally coupled to the hinge body, 13a,13b. Further, the handle frame members 14 may be pivotally coupled to the hinge body 13a, 13b, e.g. on either lateral side of the pushchair frame. The other of the front and rear leg frame members, and the handle frame members may be coupled to the hinge body 13a, 13b at different respective pivot axes.

With reference to Figures 3 to 9, a pushchair hinge assembly 300 according to arrangements of the present disclosure will now be described. The pushchair hinge assembly 300 may be provided in place of either or both of the pushchair hinge assemblies 12a, 12b of the pushchair frame 10 described above. Figures 3 to 9 depict a pushchair hinge assembly 300 to be provided on a left hand side of a pushchair frame, and it will be appreciated that a pushchair hinge assembly 300 to be provided on the opposite side of the pushchair frame may be configured as a mirror image of the pushchair hinge assembly 300 illustrated in the Figures.

When provided as part of the pushchair frame 10, the pushchair hinge assembly 300 is configured to enable the relative positions, e.g. angles, of the front leg frame members 16, rear leg frame members 20 and handle frame members 14 to be locked in the deployed configuration of the pushchair frame, and be selectively unlocked, to enable the handle frame members 14 and one of the front and rear leg frame members 16, 20 to be rotated, e.g. relative to the other of the front and rear leg frame members, into the folded configuration of the pushchair 2, e.g. the pushchair frame 10. In the arrangement depicted, it is the handle frame members 14 and rear leg frame members 20 which are unlocked to rotate relative to the front leg frame members 16. However, in other arrangements, the handle frame member 14 and front leg frame members 16 may rotate relative to the rear leg frame members 20. In such arrangements, features described in relation to the rear leg frame member 20 may apply to the front leg frame member 16 and vice versa.

It may be desirable that two actions are made by a user of the pushchair in order to unlock the pushchair hinge assembly 300 to enable the rear leg frame member 20 to move from the deployed position to the folded position, e.g. in order to avoid the rear leg member being unlocked inadvertently. The pushchair hinge assembly 300 may be configured such that two actions are required by the user in order to fold the pushchair, whilst ensuring that folding the pushchair 2 remains intuitive and simple for the user.

The pushchair hinge assembly 300 comprises a hinge body 310, a first leg member 320 a second leg member 3222 and a handle member 324. The first leg member 320 of the hinge assembly, such as a front leg member, may be coupled, e.g. fixedly coupled to, or integrally formed with the hinge body 310.

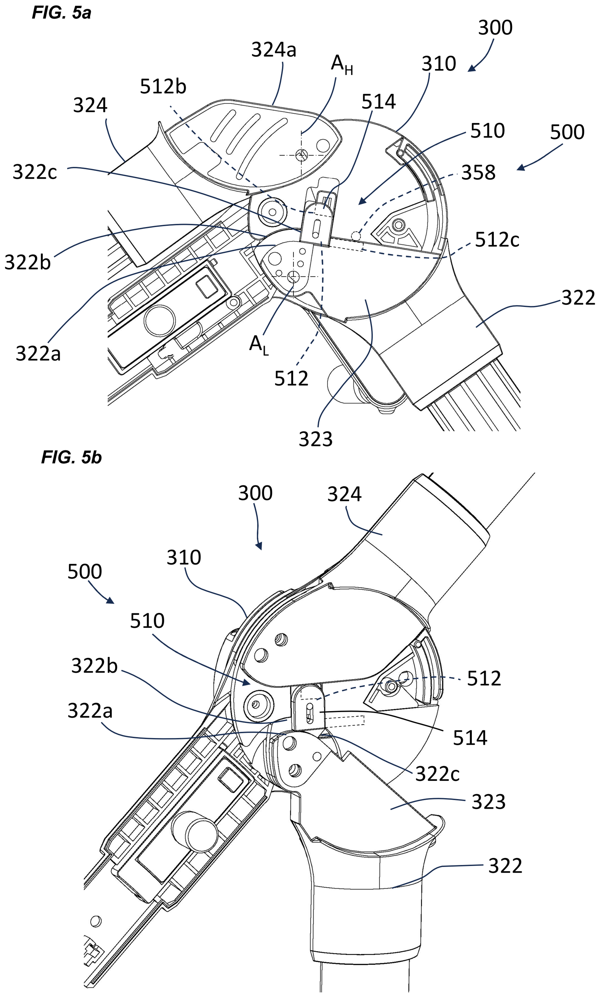

The second leg member 322 and the handle member 324 are pivotally coupled to the hinge body 310 at respective pivot axes A_{L}, A_{H} (depicted in Figure 5). In particular, the second leg member 322 may be pivotally coupled to the hinge body 310 at a leg pivot axis A_{L} and the handle member may be pivotally coupled to the hinge body at a handle pivot axis A_{H}. The leg pivot axis and the handle pivot axis may be parallel with one another. In particular, the leg pivot axis and the handle pivot axis may be substantially horizontal when the pushchair is standing upright on flat ground. The leg pivot axis and the handle pivot axis may be spaced apart from one another. In particular, the leg pivot axis and the handle pivot axis may be spaced apart from one another in a direction perpendicular to a direction in which the first leg member 320 extends, e.g. principally extends, from the hinge body 310.

When the hinge body 310 is substantially prism shaped, e.g. cylindrical, an axial direction of the hinge body may be parallel with the pivot axes A_{L}, A_{H} of the second leg member and handle member.

The first leg member 320 may be to couple to a first leg frame member of a pushchair fame, such as the front leg frame member 16 of the pushchair frame 10 described above. In alternative arrangements, the first leg frame member of the pushchair frame may be integrally formed within the first leg member 320 of the hinge assembly. In other words, the first leg member may be the first leg frame member.

The second leg member 322 may be to couple to a second leg frame member of the pushchair frame, such as the rear leg frame member 20 of the pushchair frame 10 described above. In alternative arrangements, the second leg frame member may be integrally formed within the second leg member of the hinge assembly. In other words, the second leg member 322 may be the second leg frame member 20 of the pushchair frame. Similarly, the handle member 324 may be to couple to a handle frame member of a pushchair frame, such as the handle frame member 14 of the pushchair frame 10. In alternative arrangements, the handle frame member may be integrally formed within the handle member 324 of the hinge assembly. In other words, the handle member 324 may be the handle frame member 14 of the pushchair frame.

The pushchair frame 10 including the hinge assembly 300 is thereby configured to enable the second leg frame member 20 and the handle frame member 14 of the pushchair frame 10 to be pivoted relative to one another, and the first leg frame member 16, between the deployed configuration, depicted in Figure 1, and the folded configuration, depicted in Figure 2.

The pushchair hinge assembly 300 further comprises a seat dock 350 coupled to the hinge body 310. The seat dock 350 is for a seat for the pushchair to be coupled to the pushchair hinge assembly, e.g. in order to be supported on the pushchair. The seat dock 350 is pivotally coupled to the hinge body 310 to enable the seat dock 350 to rotate relative to the hinge body about a dock pivot axis A_{D}. The dock pivot axis may be perpendicular to directions in which handle member, first leg member and second leg member extend from the hinge body. Accordingly, the dock pivot axis may be parallel with the handle pivot axis A_{H} and the second leg pivot axis A_{L}.

The seat dock 350 may comprise a body part 352, which may be substantially plate shaped. A shape of the body part 352 may correspond to a cross-sectional shape of the hinge body 310, e.g. in a plane perpendicular to the dock pivot axis A_{D}. When the hinge body is substantially cylindrically shape, the body part of the seat dock may comprise a substantially circular plate. In such arrangements, the dock pivot axis A_{D} may be aligned with a central axis of the circular plate. Additionally or alternatively, the dock pivot axis may be aligned or parallel with the longitudinal axis hinge body. The seat dock 350 may comprise a docking socket 354, e.g. coupled to the body part, configured to enable a seat for a pushchair to be mounted to the seat dock, e.g. via a correspondingly shaped docking plug provided on the seat. The docking socket 354 may form a docking channel through which the docking plug can be inserted to couple to the docking socket in a docking direction.

The seat dock may be coupled, e.g. pivotally coupled to an axial end of the hinge body. In particular, the seat dock 350 may be coupled to an inner side of the hinge body, e.g. which faces the opposite lateral side of the pushchair frame (when the hinge assembly is provided as part of the pushchair frame). Accordingly, the seat 4 for the pushchair may be supported between hinge assemblies 300 provided on either lateral side of the pushchair. In particular, the seat may be supported between the seat docks 350 on the respective pushchair hinge assemblies.

In some arrangements, a particular seat may be configured to couple to the seat dock 350 via one or more adaptors. In such arrangements, the adaptors comprise a docking plug, configured to be received within the docking socket 354, and one or more seat coupling features configured to enable the seat to be coupled to the adaptors. In further arrangements, adaptors configured to couple to the seat dock may be configured to support more than one seat, e.g. two seats, on the pushchair frame, e.g. in tandem arrangement. The docking socket 354 comprises one of more socket surfaces 356 which are parallel with the docking direction in which the docking plug of the seat or adaptor can be inserted into the docking socket 354. The socket surfaces 356 may be to guide the docking plug into the docking socket and/or support the docking plug when received within the docking socket.

The seat dock 350 may be rotatable relative to the hinge body 310 between a deployed position, in which a seat supported on the pushchair frame via the seat dock is in an appropriate orientation for a child to be seated or lying on the seat, and a folded configuration, in which at least part of the seat is substantially parallel with the first leg member 320.

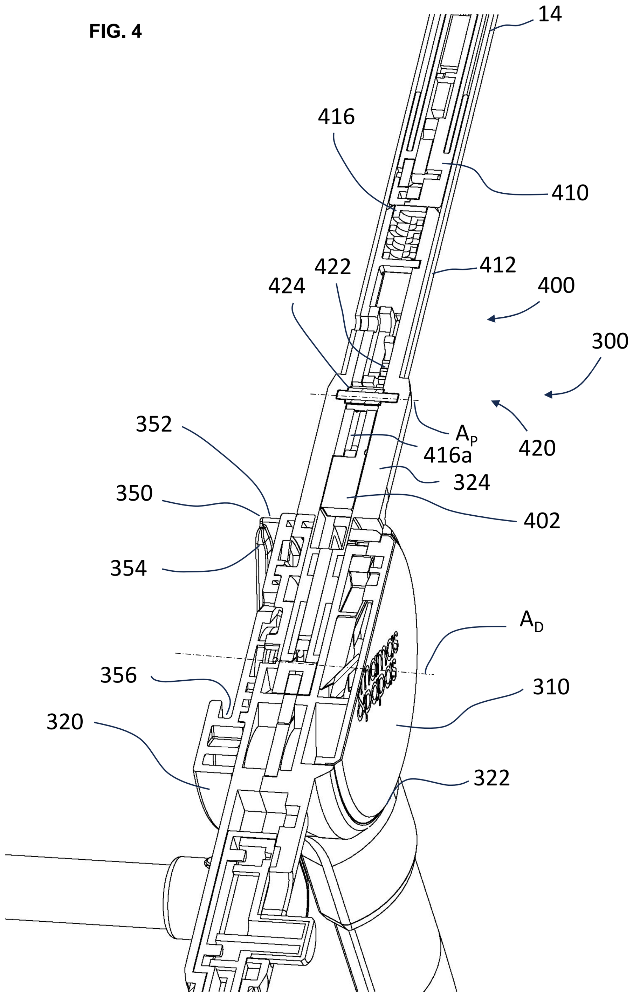

As illustrated in Figures 3 and 4, when the hinge assembly 300 including the seat dock 350 is in the deployed position, the socket surface 356 may be at an angle relative to the first and second leg members and the handle member. For example, in the deployed position, the socket surface 356 may be substantially parallel with a vertical direction, e.g. when the pushchair frame is in the deployed position and the pushchair is in an upright position, such as standing on the front and rear wheels. As shown in Figure 2, when the seat dock 350 is in the folded position, the socket surface 356 may be approximately or substantially parallel with the first leg member 320. The seat dock 350 may be configured to rotate through an angle of greater than or equal to 90 degrees between the deployed position and the folded position.

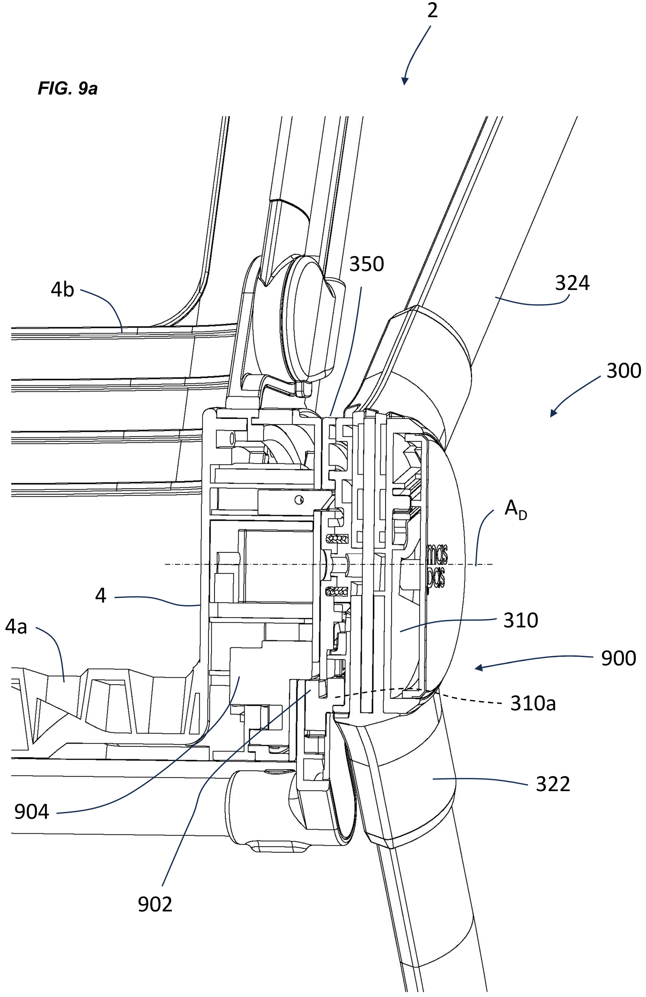

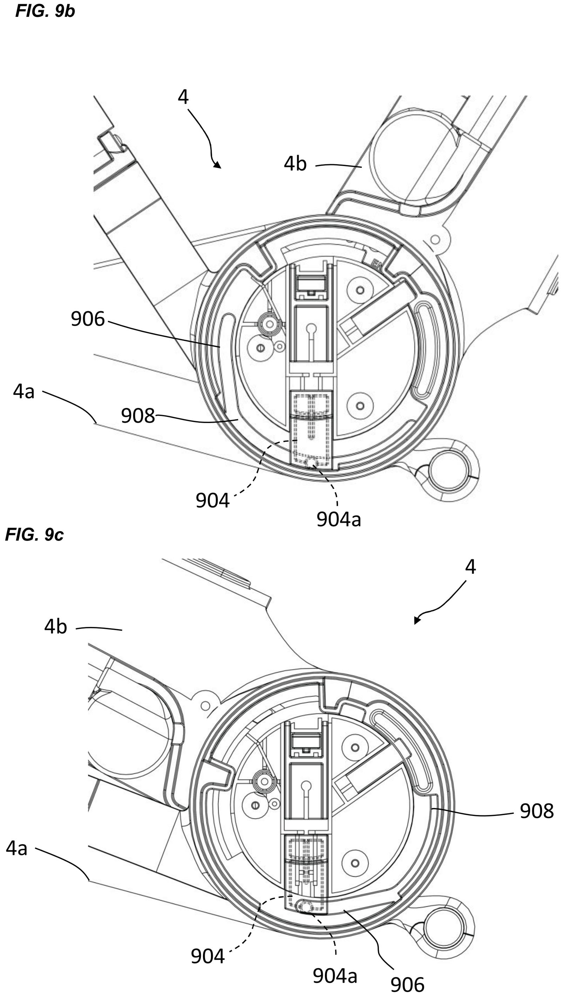

As described in greater detail below with reference to Figure 9, the seat dock 350 may comprise a dock locking mechanism 900 configured to selectively lock the seat dock in the deployed position relative to the hinge body 310.

Referring in particular to Figures 3 and 4, the hinge assembly 300 further comprises a first latch mechanism 400. The first latch mechanism 400 is configured to selectively restrict or prevent rotation of the handle member 324 about the handle pivot axis A_{P}. In particular, the first latch mechanism 400 may be configured to lock the handle member 324 in the deployed position of the handle member and prevent or restrict the handle member from moving, e.g. rotating, away from the deployed position.

The first latch mechanism 400 comprises a handle lock member 402 at least partially received within a hollow interior of the handle member. The handle lock member 402 may be configured to move, e.g. slide, relative to the handle member 324. The handle lock member 402 may be configured to selectively engage the hinge body 310, e.g. when the first latch mechanism is latched, to prevent or restrict rotation of the handle member relative to the hinge body.

As illustrated in Figures 3 and 4, the handle frame member 14 may comprise a telescoping portion 410 and a fixed portion 412. The fixed portion 412 may be coupled to, e.g. fixedly couple to, or integrally formed with the handle member 324. The telescoping portion 410 may be coupled, e.g. slidable coupled, to the fixed portion 412 at an opposite end of the fixed portion from the hinge assembly 300, e.g. the hinge body, and is configured to telescope relative to the fixed portion 412 towards and away from the hinge assembly 300, e.g. hinge body. In the arrangement shown in Figures 3 and 4, the telescoping portion 410 is received inside of the fixed portion 412, However, in other arrangements, the fixed portion 412 may be received inside the telescoping portion 410.

The first latch mechanism 400 may be configured such that telescoping the telescoping portion 410 of the handle frame member towards the hinge assembly 300, e.g. the hinge body 310, acts to disengage the handle lock member 402 from the hinge body 310, e.g. by retracting the handle lock member into the handle member 324.

The first latch mechanism 400 may comprise a rack and pinion mechanism 420. A rack 422 of the rack and pinion mechanism may be coupled to, or integrally formed on, the handle lock member 402. The pinion gear 424 may be pivotally supported on the handle member or handle frame member, e.g. for rotation about a pinion axis A_{P}. The rack and pinion mechanism 420 may thereby be configured such that rotation of the pinion gear 424 acts to disengage the handle lock member 402 from the hinge body, e.g. by retracting the handle lock member into the handle member 324.

The first mechanism 400 may further comprise a handle lock plunger 416. The handle lock plunger may be provided inside a hollow interior of the handle frame member 14, e.g. the fixed portion 412, and may extend from the pinion gear 404 away from the hinge assembly 300, e.g. away from the hinge body. The handle lock plunger 416 may extend from the pinion gear 404 towards the telescoping portion 410 of the handle frame member. The telescoping portion 410 of the handle frame member may be configured to engage the handle lock plunger 416 when the telescoping portion is telescoped towards the hinge assembly and urge the handle lock plunger 416 to move towards the hinge assembly.

The handle lock plunger 416 may further comprise a plunger rack 416a meshingly engaged with the pinion gear 404. The plunger rack 416a may be meshingly engaged with the pinion gear 424 on an opposite side of the pinion axis A_{P} from the rack 422. Accordingly, when the handle lock plunger is urged towards the hinge assembly, e.g. the hinge body, the rack and pinion mechanism 400 causes the handle lock member 402 to be moved away from the hinge assembly, e.g. from the hinge body. The handle frame member 14, e.g. the telescoping portion 410, and the first latch mechanism 400 may be configured such that, when the telescoping portion 410 is substantially fully telescoped towards the hinge assembly 300, the handle lock member 402 is no longer engaged with the hinge body 310. Accordingly, substantially fully telescoping the telescoping portion 410 towards the hinge assembly 300 may unlock the first latch mechanism 400 to enable the handle member 324 to rotate relative to the hinge body 310 towards the folded position of the handle member.

Referring now to Figures 5 to 8, the hinge assembly 300 further comprises a second latch mechanism 500. The second latch mechanism is configured to selectively restrict rotation of the second leg member 322 about the leg axis A_{L} based on a pivot angle of the handle member 324 about the handle pivot axis A_{H} and a pivot angle of the seat dock 350 about the dock pivot axis A_{D}. In particular, and as described in great detail below, the second latch mechanism 500 may be configured to prevent or restrict rotation of the second leg member 322 from the deployed position towards the folded position when the handle member 324 is not in the folded position or is in the deployed position. Additionally, the second latch mechanism 500 may be configured to prevent or restrict the rotation of the second leg member 322 from the deployed position towards the folded position when the seat dock 350 is not in the folded position or is in the deployed position. However, in one or more arrangements, the second latch mechanism 500 may be configured to permit the second leg member 322 to move from the folded position to the deployed position when the handle member 324 is in the folded position or the deployed position and/or when the seat dock 350 is in the folded position or the deployed position. In other words, the second latch mechanism 500 may be configured to permit the second leg member 322 to move from the folded position to the deployed position regardless of the positions of the handle member 324 and/or the seat dock 350.

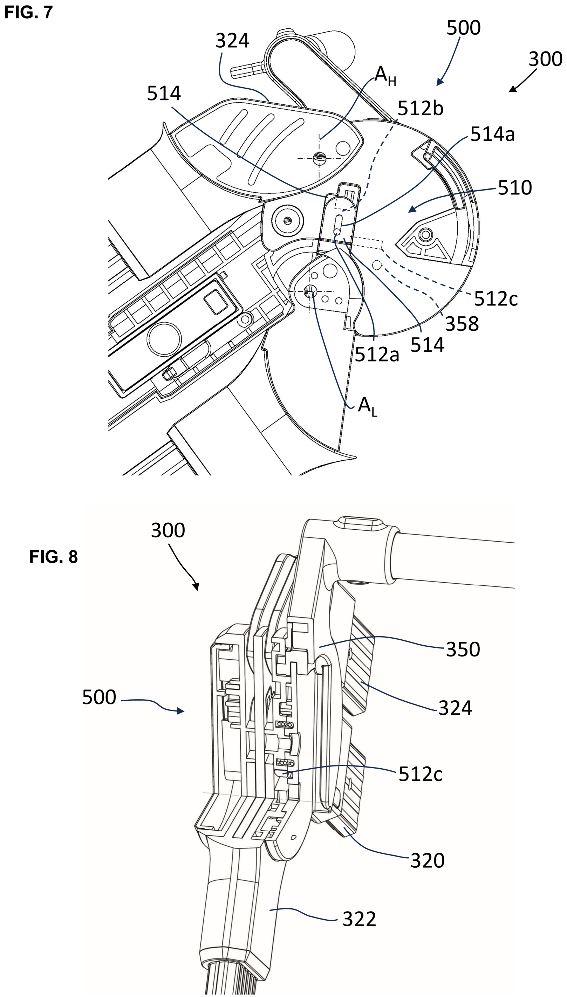

Referring in particular to Figures 5a, 5b and 7, the second latch mechanism 500 comprises a lock assembly 510 movably, e.g. slidably, mounted on the hinge body 310.

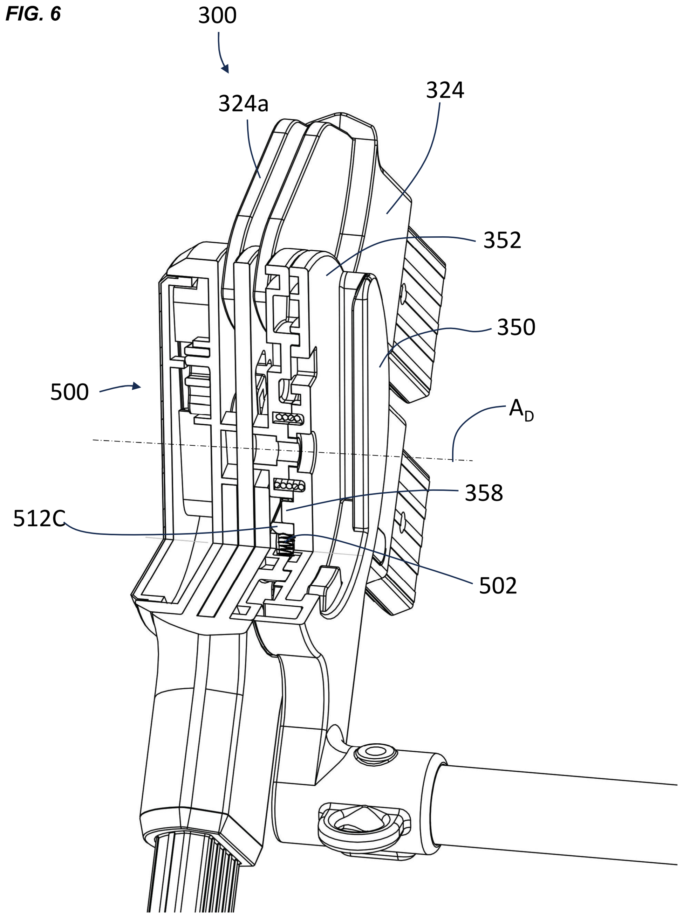

The lock assembly 510 is movable relative to the hinge body 310 between a locking position, depicted in Figure 5a, in which the lock assembly 510 can engage the second leg member 322 in the deployed position of the second leg member to prevent or restrict the second leg member from moving, e.g. rotating, toward the folded position, and an unlocked position, depicted in Figure 7, in which the lock assembly 510 does not engage the second leg member. The lock assembly 510 may be biased into the unlocked position of the lock assembly. For example, the second latch mechanism 500 may comprise a resilient element 502 (shown in Figure 6), such as a coil spring, configured to bias the lock assembly 510 into the locked position.

The lock assembly 510 may comprise a first locking part 512 and a second locking part 514. The lock assembly 510 may be coupled to the hinge body 310 by the second locking part 514. Further, the lock assembly 510 may be biased towards the locking position at the second locking part. In other words, the resilient element 502 may act between the hinge body and the second locking part to bias the lock assembly 510 into the locking position. The position of the lock assembly 510 may be determined by the position of the second locking part 514.

The first locking part 512 may be movably, e.g. slidably, coupled to the second locking part 514. The first locking part 512 may be movable relative to the second locking part in a direction parallel with the direction in which the lock assembly 510 moves relative to the hinge body. The first locking part 512 may be movable between a relative locking position, depicted in Figures 5a and 7, and an override position, depicted in Figure 5b. In the relative locking position, the first locking part 512 can engage the second leg member 322 to prevent or restrict the second leg from moving from the deployed position toward the folded position, when the lock assembly 510 is in the locking position. In the override position, the first locking part 512 does not prevent movement the second leg member 322 between the folded position and the deployed position of the second leg member.

As illustrated, one of the first and second locking parts may comprise a slot 514a, and the other of the first and second locking parts may comprise a pin 512a received within the slot. For example, the first locking part may comprise the pin and the second locking part may comprise the slot. The pin 512a may slide within the slot 514a, e.g. between longitudinal ends of the slot, as the first locking part 512 moves relative to the second locking part 514. Movement of the first locking part 512 relative to the second locking part 514 may be at least partially guided by the pin 512a sliding within the slot 514a. For example, an extent of the relative movement between the first and second locking parts may be determined by the pin engaging the longitudinal ends of the slot.

The handle member 324 comprises a cam portion 324a. The cam portion 324a may be disposed at least partially about the handle pivot axis A_{H}. As illustrated, the handle member 324 may comprise a plate part 324b. The handle member may be coupled to the hinge body at the plate part 324b, e.g. via a pivot pin passing through a bore formed in the plate part 324b. The cam portion 324a may be formed by the plate part. For example, a cam surface of the cam portion 324a may be formed by an edge of the plate part 324b.

As depicted in Figure 5b, the cam portion 324a may be configured to engage the lock assembly 510, e.g. the second locking part 514 of the lock assembly 510, when the handle member is in the deployed position, and maintain the lock assembly 510 in the locking position. As described above, the handle member 324 may be locked in the deployed position by the first latch mechanism 400. Hence, when the handle member is in the deployed position and the first latch mechanism is latched, the lock assembly 510 of the second latch mechanism may be maintained in the locking position. The second latch mechanism 500 is thereby configured to prevent or restrict rotation of the second leg member, e.g. from the deployed position towards the folded position, when the handle member is in the deployed position or is not in the folded position.

Further, the cam portion 324a may be configured to engage the lock assembly 510, e.g. the second locking part 514, as the handle member 324 moves from the folded position to the deployed position and urge the lock assembly 510 to move into the locking position. As shown in Figure 7, when the handle member 324 is in the folded position, the cam portion 324a may allow the lock assembly to move into the unlocked position. For example, the cam portion 324a may not engage, or may be spaced apart from, the lock assembly 510 in the unlocked position of the lock assembly 510, when the handle member 324 is in the folded position.

With reference to Figure 6, the seat dock 350 may comprise a boss 358, which projects from the body part 352 of the seat dock towards the second locking mechanism 500. As illustrated in Figure 6, when the seat dock 350 is in the deployed position, the boss 358 may engage the lock assembly 510. In particular, the boss may be arranged to engage the first locking part 512.

The first locking part may comprise a body part 512b the body part may be configured to engage the cam portion 324a of the handle member 324 and may be configured to engage the first cam portion 322a of the second leg member, as described below. The first locking part may further comprise an extension portion 512c. The extension portion may be elongate and may extend from the body part 512b in a direction with a component perpendicular to the direction the lock assembly moves between the locking and unlocked positions. The boss 358 of the seat dock may engage the extension portion 512c of the second locking part.

When the seat dock is in the deployed position, the boss 358 may be arranged on a side of the lock assembly to which the lock assembly 510 moves from the locking position to the unlocked position, and may engage the lock assembly 510, e.g. the first locking part 512, on that side. The boss 358 may thereby restrict or prevent the lock assembly 510 from moving from the locking position to the unlocked position whilst the seat dock is in the deployed position.

As shown in Figure 8, when the seat dock 352 is in the folded position, the boss 358 may no longer engage the lock assembly 510. For example, the boss 358 may be spaced apart from the first locking part, e.g. the extension portion of the first locking part. When the seat dock 350 is in the folded position, the lock assembly 510 may be movable between the deployed position and the folded position without engaging, or having its movement restricted by, the boss 358.

With reference now to Figure 9, the seat dock 350 may comprise a dock locking mechanism 900 configured to selectively lock the seat dock in the deployed configuration. In particular, the dock locking mechanism 900 may be configured to lock the seat dock in the deployed position, when a seat 4 or an adaptor is coupled to the seat dock, e.g. via the dock socket.

The dock locking mechanism 900 may comprises a block part 902 arranged within the docking channel of the seat dock 350. The block part 902 is arranged such that, when a seat or and adaptor is docked in the seat dock, the block part 902 is displaced by the seat, other attached or adaptor to lock the dock locking mechanism. More particularly, the block part 902 may be urged out of the docking channel so that the block part 902 engages a complementary locking surface 310a of the hinge body 310 and thereby locks the seat dock 350 relative to the hinge body, e.g. about the dock pivot axis A_{D}.

The block part 902 may be biased into a position in which the block part 902 is arranged at least partially within the docking channel and does not engage the complementary locking surface 310a of the hinge body. Hence, removing the seat 4, other attachment or adaptor the docking socket, may unlock the dock locking mechanism 900 to allow the seat dock to rotate relative to the hinge body.

In some arrangements, when the seat 4 comprises a reclining seat having a seat base 4a and a seat back 4b, the seat 4 may be configured to fold, e.g. from a deployed position of the seat to a folded position, in which the seat back 4b is arranged substantially parallel with and along side the seat base 4a. In such arrangements, the seat 4 may be configured to remain attached to the pushchair frame 10 in the folded configuration of the seat 4 when the pushchair frame 10 is folded. As depicted in Figure 9a, the seat 4 may comprise a seat fold dock block 904. The seat fold dock block 904 may be arranged to engage the block part 902, e.g. in the docking channel, when the seat 4 is coupled to the seat dock, to urge the bock part out of the docking channel.

Referring to Figures 9b and 9c, the seat 4 may comprise a ramp portion 906, e.g. coupled to or formed on the seat back 4b. When the seat is folded, the ramp portion 906 may engage the seat fold dock block 904 to move the seat fold dock block 904 away from the block part 902, so that the block part disengages from the complementary locking surface 310a of the hinge body. In this way, folding the seat 4 may cause the dock locking mechanism to become unlocked. As shown in Figures 9a and 9b, the seat fold dock block may comprise a pin portion 904a received in a slot 908 formed in the seat 4, e.g. on the seat back 4b. The ramp portion 906 may comprise at least a portion of the slot 908, e.g. a wall of the slot 908 or part of the length of the slot. When the seat is folded, the pin portion 906 may be moved along the slot, e.g. due to movement of the slot relative to the pin portion, so that the pin portion engages the ramp portion 906 and the seat fold dock block 904 is moved away from the block part 902.

Returning to Figures 5a, 5b and 7, the second leg member 322 may comprise a first cam portion 322a. The first cam portion 322a may be disposed at least partially about the leg pivot axis A_{L}. As illustrated, the second leg member 322 may comprise a plate part 323. The second leg member may be coupled to the hinge body 310 by the plate part 323, e.g. via a pivot pin passing through a bore formed in the plate part 323. The first cam portion 322a may be formed by the plate part 323. As depicted, the plate part 323 may comprise a step 323a in a thickness direction of the plate, e.g. in a direction parallel with the leg pivot axis A_{L}. The first cam portion 322a may be formed by a riser surface of the step 323a e.g. a surface of the step parallel with the thickness direction of the plate, which may be parallel with the leg pivot axis.

The first cam portion 322a may be aligned, e.g. at least partially or substantially completely aligned, with the second locking part 514 in a direction perpendicular to the direction the lock assembly moves between the locking position and the unlocked position and/or a direction parallel with the leg pivot axis A_{L}.

The first cam portion 322a may be arranged to engage the lock assembly, e.g. the second locking part 514, when the second leg member 322 is in the deployed position and the lock assembly 510 is in the locking position. The first cam portion 322a and the second locking part 514 may be configured such that engagement between the first cam portion 322a and the second locking part 514 in the deployed position of the second leg member act to prevent or restrict movement of the second leg member from the deployed position to the folded position. Alternatively, in other arrangements, the first cam portion 322a and the lock assembly 510 may be configured such that the first cam portion does not engage the lock assembly, e.g. the second locking part 514, when the second leg member is in the deployed position. Additionally or alternatively, the first cam portion 322a and the lock assembly 510 may be configured such that engagement between the first cam portion and the lock assembly, e.g. the second locking part, does not prevent or restrict movement of the second leg member 322 between the deployed position and the folded position.

The second leg member may further comprise a second cam portion 322b. The second cam portion may be formed by an edge surface of the plate part 323 of the second leg member.

The second cam portion 322b may be aligned, e.g. at least partially or substantially completely aligned, with the first locking part 512 in the direction perpendicular to the direction the lock assembly 510 moves between the locking position and the unlocked position and/or the direction parallel with the second leg pivot axis A_{L}. The second cam portion 322b may be configured to engage the first locking part 512 when the second leg member 322 is between the folded position and the deployed position.

As shown in Figure 5b, the second leg member, e.g. the second cam portion 322b, is configured to engage the first locking part 512, when the second leg member is moved from the folded position towards the deployed position and the lock assembly is in the locking position, and urge the first locking part to move from the relative locking position towards the override position. The first locking part 512 may move into the override position when the handle member 324 and/or the seat dock 350 are in the deployed positions, e.g. in which the handle member and/or the seat dock prevent the lock assembly 510 from moving out of the locking position. Hence, by moving from the relative locking position to the override position, the first locking part 512 may permit the second leg member 322 to move, e.g. rotate, from the folded position to the deployed position when the lock assembly 510 is in the locked position.

As shown in Figures 5a and 5b, the second cam portion 322b comprises a step 322c, at which the cam portion extends in a substantially radial direction relative to the leg member pivot axis A_{L}. As shown in Figure 5a, when the second leg member 322 reaches the deployed position, the first locking part 512 may no longer be maintained in the override position by the second cam portion 322b and may move, e.g. relative to the second locking part, over, e.g. down, the step 322c to the relative locking position of the first locking part 512, e.g. by virtue of the first locking position being biased into the relative locking position. As shown, when the second leg member 322 is in the deployed position, the first locking part 512 may configured to engage the step 322c. The step, e.g. a rise of the step, may extend in a direction parallel with the direction in which the first locking part moves from the relative locking position to the override position, so that the first locking part is not urged to move from the relative locking position to the override position due to its engagement with the step 322c. The second leg member 322 may thereby be locked in the deployed position.

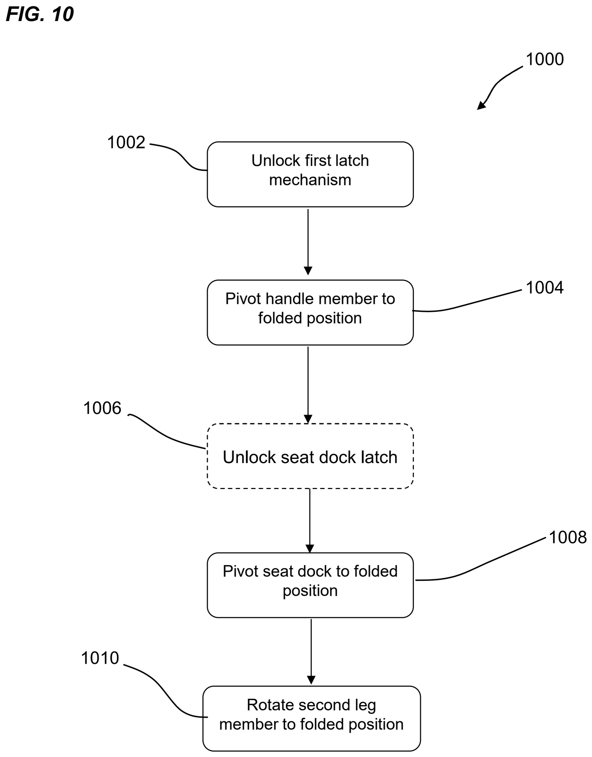

With reference to Figure 10, a method 1000 of folding a pushchair, such as the pushchair 2, having a pushchair frame 10 including the pushchair hinge assembly 300 will now be described. Folding the pushchair 2 may comprise moving the components of the pushchair from respective deployed positions to respective folded positions.

The method comprises a first step 1002, in which the first latch mechanism 400 is unlocked. For example, the telescoping portion 410 of the handle frame member 14 may be telescoped towards the hinge assembly 300 in order to disengage the handle lock member 402 from the hinge body 310 to unlock the first latch mechanism.

The method comprises a second step 1004, in which the handle frame member 14 is pivoted to the folded position, e.g. from the deployed position. The second step 1004 may be performed after the first step 1002.

The method 1000 may comprise a third step 1006, in which the dock locking mechanism 900 is unlocked. For example, when a folding seat 4 is docked in the seat dock, the dock locking mechanism may be unlocked by folding the seat. Alternatively, the seat or adaptor may be removed from the seat dock 350 to unlock the dock locking mechanism 900. It will be appreciated, that if no seat or adaptor is coupled to the seat dock, then the third step 1006 may not be performed.

The method comprises a fourth step 1008, in which the seat dock 350 is pivoted to the folded position. The fourth step 1008 may be performed after the third step (if performed). Although in the arrangement depicted, the first and second steps 1002, 1004 are performed before the third and fourth steps 1006, 1008, it will be appreciated that the first, second, third and fourth step may be performed in any order, e.g. provided that the first step 1002 is performed before the second step 1004 and the third step 1006 is performed before the fourth step 1008.

The method comprises a fifth step 1010, in which the second leg member is rotated to the folded position.

The following additional statements of invention also form part of the present specification:
Statement 1. A pushchair hinge assembly comprising:
   a hinge body;
   a seat dock coupled to the hinge body for pivotal movement about a dock pivot axis;
   a handle member coupled to the hinge body for pivotal movement about a handle pivot axis;
   a first leg member coupled to the hinge body; and
   a second leg member coupled to the hinge body for pivotal movement about a leg pivot axis, wherein the hinge assembly further comprises a first latch mechanism configured to selectively restrict rotation of the handle member about the handle pivot axis; and a second latch mechanism configured to selectively restrict rotation of the second leg member about the leg pivot axis based on a pivot angle of the handle member about the handle pivot axis and a pivot angle of the seat dock about the dock pivot axis.
Statement 2. The pushchair hinge assembly of statement 1, wherein the handle member is pivotable about the handle pivot axis between a folded position, in which the handle frame member is substantially parallel with the first leg member, and a deployed position, in which the handle member is at an angle relative to the first leg member.
Statement 3. The pushchair hinge assembly of statement 1 or 2, wherein the first latch mechanism is configured to selectively prevent or restrict the handle member from pivoting from the deployed position towards the folded position.
Statement 4. The pushchair hinge assembly of any of the preceding statements, wherein the first latch mechanism comprises a handle lock member at least partially received within an interior of the handle member, wherein the handle lock member selectively engages the hinge body to prevent or restrict rotation of the handle.
Statement 5. The pushchair hinge assembly of statement 4, wherein the first latch mechanism comprises a rack and pinion mechanism, wherein the rack is coupled to the handle lock member and wherein rotation of the pinon gear thereby acts to retract the handle lock member, so that the handle lock member does not engage the hinge body.
Statement 6. The pushchair hinge assembly of any of the preceding statements, wherein the assembly further comprises a handle frame member coupled to, or integrally formed with, the handle member, wherein the handle frame member comprises a telescoping portion configured to telescope relative to a fixed portion of the handle frame member towards and away from the hinge body.
Statement 7. The pushchair hinge assembly of statement 6, wherein the first mechanism is configured such that telescoping the telescoping portion of the handle frame member towards the hinge body acts to retract the handle lock member, so that the handle lock member no longer engages the hinge body.
Statement 8. The pushchair hinge assembly of statement 6 or 7, wherein the first mechanism comprises a handle lock plunger, wherein the telescoping portion is configured to engage the handle lock plunger, when the telescoping portion is telescoped towards the hinge assembly, and urge the handle lock plunger to move towards the hinge assembly, wherein the handle lock plunger is configured to rotate the pinion of the first latch mechanism to cause the handle lock member to disengage from the hinge body when the handle lock plunger is moved towards the hinge assembly.
Statement 9. The pushchair hinge assembly of any of the preceding statements, wherein the second latch mechanism is configured to prevent or restrict rotation of the second leg member when the handle member in the deployed position.
Statement 10. The pushchair hinge assembly of any of the preceding statements, wherein the second latch mechanism comprises a lock assembly movably, e.g. slidably, mounted on the hinge body, wherein the lock assembly is movable relative to the hinge body between a locking position, in which the lock assembly can engage the second leg member in the deployed position of the second leg to prevent or restrict the second leg from moving toward the folded position, and an unlocked position, in which the lock assembly does not engage the second leg member.
Statement 11. The pushchair hinge assembly of statement 10, wherein the handle member comprises a cam portion configured to engage the lock assembly and maintain the lock assembly in the locking position when the handle member is in the deployed position of the handle member.
Statement 12. The pushchair hinge assembly of any of the preceding statements, wherein the seat dock is pivotable relative to the hinge body between a deployed position, in which a docking surface of the seat dock is substantially parallel with a vertical direction, and a folded position, in which the docking surface is substantially parallel with a direction in which the first leg member extends.
Statement 13. The pushchair hinge assembly of any of the preceding statements, wherein the seat dock is rotatable through an angle of greater than or equal to 90 degrees between deployed and folded positions of the seat dock.
Statement 14. The pushchair hinge assembly of any of the preceding statements, wherein the second latch mechanism is configured to prevent or restrict rotation of the second leg member when the seat dock in the deployed position.
Statement 15. The pushchair hinge assembly of statement 10 or any of statements 11 to 14 when depending on statement 10, wherein the seat dock comprises a boss configured to engage the lock assembly and maintain the lock assembly in the locking position when the seat dock is in the deployed position.
Statement 16. The pushchair hinge assembly of statement 10 or any of statements 11 to 15 when depending on statement 10, wherein the lock assembly comprises a first locking part and a second locking part, wherein the first locking part is movably, e.g. slidably coupled to the second locking part.
Statement 17. The pushchair hinge assembly of statement 16, wherein the first locking part is movable relative to the second locking position between a relative locking position, in which, when the lock assembly is in the locking position, the first locking part can engage the second leg member to prevent or restrict the second leg from moving from the deployed position toward the folded position, and an override position, in which the first locking part does not prevent movement the second leg member between the folded position and the deployed position.
Statement 18. The pushchair hinge assembly of statement 16 or 17 when depending on statement 11, wherein the cam portion of the handle member is configured to engage the second locking part to maintain the lock assembly in the locking position when the handle member is in the deployed position.
Statement 19. The pushchair hinge assembly of statements 16 to 18, wherein the second leg member comprises a cam portion configured to engage the first locking part when the second leg member is in the folded position, wherein the cam portion is configured to urge the first locking part into the override position when the second leg member is moved from the folded position towards the deployed position[, in order to permit the second leg member to move when the lock assembly is in the locking position].
Statement 20. The pushchair hinge assembly of statement 19, wherein the cam portion of the second leg member comprises a step, wherein a rise of the step extends in a direction parallel with the direction in which the first locking part moves from the relative locking position to the override position, wherein, when the second leg member is in the deployed position, the first locking part is configured to engage the rise of the step portion.
Statement 21. The pushchair hinge assembly of any of the preceding statements, wherein the seat dock comprises a dock locking mechanism configured to selectively lock the seat dock in the deployed position.
Statement 22. The pushchair hinge assembly of statement 21, wherein the dock locking mechanism comprises a block part, wherein the block part is configured to be displaced by a seat or adaptor docked in the seat dock to lock the dock locking mechanism.
Statement 23. A pushchair comprising:
   the pushchair hinge assembly of any of the preceding statements;
   a handle frame member coupled to, or integrally formed with the handle member;
   a first leg member coupled to, or integrally formed with the first leg member; and
   a second leg member coupled to, or integrally formed with the second leg member.
Statement 24. The pushchair of statement 23 when depending on statement 22, further comprising a seat configured to be docked in the seat dock, wherein the seat comprises a seat fold dock block, wherein the seat fold dock block is configured to displace the block when the seat is in a deployed configuration and not displace the block when the seat is in a folded configuration, in order to permit the seat dock to rotate relative to the hinge body.
Statement 25. A method of folding a pushchair, wherein the pushchair comprises a pushchair hinge assembly of any of statements 1 to 22, wherein the method comprises:
   unlocking the first locking mechanism;
   folding the handle member into the folded configuration; and
   rotating the seat dock into the folded configuration, in order to unlock the second locking mechanism, wherein the method further comprise folding the second leg member into the folded configuration.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

## Claims

1. A pushchair hinge assembly comprising:
a hinge body;
a seat dock coupled to the hinge body for pivotal movement about a dock pivot axis;
a handle member coupled to the hinge body for pivotal movement about a handle pivot axis;
a first leg member coupled to the hinge body; and
a second leg member coupled to the hinge body for pivotal movement about a leg pivot axis, wherein the hinge assembly further comprises a first latch mechanism configured to selectively restrict rotation of the handle member about the handle pivot axis; and a second latch mechanism configured to selectively restrict rotation of the second leg member about the leg pivot axis based on a pivot angle of the handle member about the handle pivot axis and a pivot angle of the seat dock about the dock pivot axis.

2. The pushchair hinge assembly of claim 1, wherein the first latch mechanism comprises a handle lock member at least partially received within an interior of the handle member, wherein the handle lock member selectively engages the hinge body to prevent or restrict rotation of the handle, wherein the first latch mechanism comprises a rack and pinion mechanism, wherein the rack is coupled to the handle lock member and wherein rotation of the pinon gear thereby acts to retract the handle lock member, so that the handle lock member does not engage the hinge body.

3. The pushchair hinge assembly of any of the preceding claims, wherein the assembly further comprises a handle frame member coupled to, or integrally formed with, the handle member, wherein the handle frame member comprises a telescoping portion configured to telescope relative to a fixed portion of the handle frame member towards and away from the hinge body, wherein the first mechanism is configured such that telescoping the telescoping portion of the handle frame member towards the hinge body acts to retract the handle lock member, so that the handle lock member no longer engages the hinge body.

4. The pushchair hinge assembly of claim 3, wherein the first mechanism comprises a handle lock plunger, wherein the telescoping portion is configured to engage the handle lock plunger, when the telescoping portion is telescoped towards the hinge assembly, and urge the handle lock plunger to move towards the hinge assembly, wherein the handle lock plunger is configured to rotate the pinion of the first latch mechanism to cause the handle lock member to disengage from the hinge body when the handle lock plunger is moved towards the hinge assembly.

5. The pushchair hinge assembly of any of the preceding claims, wherein the second latch mechanism comprises a lock assembly movably, e.g. slidably, mounted on the hinge body, wherein the lock assembly is movable relative to the hinge body between a locking position, in which the lock assembly can engage the second leg member in the deployed position of the second leg to prevent or restrict the second leg from moving toward the folded position, and an unlocked position, in which the lock assembly does not engage the second leg member.

6. The pushchair hinge assembly of claim 5, wherein the handle member comprises a cam portion configured to engage the lock assembly and maintain the lock assembly in the locking position when the handle member is in the deployed position of the handle member.

7. The pushchair hinge assembly of claim 5 or 6, wherein the seat dock comprises a boss configured to engage the lock assembly and maintain the lock assembly in the locking position when the seat dock is in the deployed position.

8. The pushchair hinge assembly of claim 6 or 7, wherein the lock assembly comprises a first locking part and a second locking part, wherein the first locking part is movably, e.g. slidably coupled to the second locking part.

9. The pushchair hinge assembly of claim 8, wherein the first locking part is movable relative to the second locking position between a relative locking position, in which, when the lock assembly is in the locking position, the first locking part can engage the second leg member to prevent or restrict the second leg from moving from the deployed position toward the folded position, and an override position, in which the first locking part does not prevent movement the second leg member between the folded position and the deployed position.

10. The pushchair hinge assembly of claim 8 or 9 when depending on claim 6, wherein the cam portion of the handle member is configured to engage the second locking part to maintain the lock assembly in the locking position when the handle member is in the deployed position.

11. The pushchair hinge assembly of claims 8 to 10, wherein the second leg member comprises a cam portion configured to engage the first locking part when the second leg member is in the folded position, wherein the cam portion is configured to urge the first locking part into the override position when the second leg member is moved from the folded position towards the deployed position, optionally wherein the cam portion of the second leg member comprises a step, wherein a rise of the step extends in a direction parallel with the direction in which the first locking part moves from the relative locking position to the override position, wherein, when the second leg member is in the deployed position, the first locking part is configured to engage the rise of the step portion.

12. The pushchair hinge assembly of any of the preceding claims, wherein the seat dock comprises a dock locking mechanism configured to selectively lock the seat dock in the deployed position, wherein the dock locking mechanism comprises a block part, wherein the block part is configured to be displaced by a seat or adaptor docked in the seat dock to lock the dock locking mechanism.

13. A pushchair comprising:
the pushchair hinge assembly of any of the preceding claims;
a handle frame member coupled to, or integrally formed with the handle member;
a first leg member coupled to, or integrally formed with the first leg member; and
a second leg member coupled to, or integrally formed with the second leg member.

14. The pushchair of claim 13 when depending on claim 12, further comprising a seat configured to be docked in the seat dock, wherein the seat comprises a seat fold dock block, wherein the seat fold dock block is configured to displace the block when the seat is in a deployed configuration and not displace the block when the seat is in a folded configuration, in order to permit the seat dock to rotate relative to the hinge body.

15. A method of folding a pushchair, wherein the pushchair comprises a pushchair hinge assembly of any of claims 1 to 12, wherein the method comprises:
unlocking the first locking mechanism;
folding the handle member into the folded configuration; and
rotating the seat dock into the folded configuration, in order to unlock the second locking mechanism, wherein the method further comprise folding the second leg member into the folded configuration.
